(19) Europäisches Patentamt / European Patent Office / Office européen des brevets

(11) **EP 2 045 930 B1**

(12) **EUROPEAN PATENT SPECIFICATION**

(45) Date of publication and mention
of the grant of the patent:
**28.07.2010 Bulletin 2010/30**

(51) Int Cl.:
*H04B 7/005* (2006.01)

(21) Application number: **07019150.7**

(22) Date of filing: **28.09.2007**

(54) **Decentralized C/I power control for TDD**

Dezentralisierte C/I-Leistungssteuerung für TDD

Contrôle électrique C/I décentralisé pour TDD

(84) Designated Contracting States:
**DE GB**

(43) Date of publication of application:
**08.04.2009 Bulletin 2009/15**

(73) Proprietor: **NTT DoCoMo, Inc.**
**Tokyo 100-6150 (JP)**

(72) Inventors:
• **Auer, Gunther**
**80339 München (DE)**
• **Tyrrell, Alexander**
**85356 Freising (DE)**

(74) Representative: **Zinkler, Franz**
**Schoppe, Zimmermann, Stöckeler & Zinkler**
**Patentanwälte**
**Postfach 246**
**82043 Pullach bei München (DE)**

(56) References cited:
EP-A- 1 855 390          WO-A-02/082751
WO-A-2006/007318          JP-A- 2007 235 830
US-A1- 2002 196 840

• TYRRELL A ET AL: "Decentralized Interference Aware Link Adaptation Using Busy Bursts" COMMUNICATIONS, 2007. ICC '07. IEEE INTERNATIONAL CONFERENCE ON, IEEE, PI, June 2007 (2007-06), pages 3213-3217, XP031126166 ISBN: 1-4244-0353-7
• HAAS H ET AL: "Interference Aware Medium Access in Cellular OFDMA/TDD Networks" COMMUNICATIONS, 2006. ICC '06. IEEE INTERNATIONAL CONFERENCE ON, IEEE, PI, June 2006 (2006-06), pages 1778-1783, XP031025319 ISBN: 1-4244-0354-5

EP 2 045 930 B1

**Description**

The present invention is in the field of ad hoc, sensor or multi hop networks, where power control is critical for system capacity.

As part of present communication networks ad hoc-, sensor-and multi hop networks or network components gain more and more significance. These networks are power constraint, where power control is critical as it cannot be carried out or controlled by a central network entity. C/I power control, where C represents a carrier power and I represents an interference power, targets to achieve a certain carrier-to-interference ratio (C/I = Carrier-to-Interference ratio) for each receiving node and is especially critical for time division duplex (TDD = Time Division Duplex) scenarios, where links between any two nodes are used in two directions. Assuming a transmitter Tx and a receiver Rx, in the following a transmission from Tx to Rx will be referred to as forward link (FL = Forward Link) and a transmission in the opposite direction will be referred to as reverse link (RL = Reverse Link). Moreover it is assumed that bidirectional communication is carried out, i.e. nodes that transmit data to another node on the forward link also receive data from the same node on the reverse link. In the scenarios illuminated in the following the reverse link can be either a low rate feedback link used for link adaptation purposes or a full duplex TDD link.

In the prior art decentralized power allocation schemes have been studied for a general class of algorithms in K. K. Leung, C. W. Sung, W. S. Wong, and T. M. Lok, "Convergence Theorem for a General Class of Power-Control Algorithms," IEEE Transactions on Communications, Vol. 52, No. 9, pp. 1566 - 1574, Sep. 2004. Within this class falls the algorithm for C/I power control proposed by G.J. Foschini and Z. Miljanic, "A Simple Distributed Autonomous Power Control Algorithm and its Convergence," IEEE Transactions on Vehicular Technology, Vol. 42, No. 4, pp. 641 - 646, Nov. 1992, where a transmitter $Tx^m$ updates its transmit power as:

$$T_m(k) = \frac{\Gamma_m}{\gamma_m(k-1)} \cdot T_m(k-1) \qquad (1)$$

where $\Gamma_m$ and $\gamma_m(k)$ denote the target and the achieved measured SINR (SINR = Signal-to-Interference-and-Noise-Ratio) at time instant $k$ of the corresponding receiver $Rx_m$, respectively. It has been shown by Foschini and Miljanic as well as in D. Mitra, "An Asynchronous Distributed Algorithm for Power Control in Cellular Radio Systems," in Proceedings of the WINLAB Workshop on Third Generation Wireless Information Networks, New Brunswick, USA, Oct. 1993, that the power allocation of (1) is a *Pareto optimal solution,* in the sense that any other set of transmit powers $\{T_m\}$ satisfying (1) would require as much power from every transmitter. The Foschini scheme converges to the exact required SINR while minimizing the required transmit power.

Although the C/I power control of Foschini and Miljanic is very simple, it does require to exchange the effective SINR from receiver to transmitter. This implies that a feedback link from Rx to Tx needs to be established, which might be subject to power control itself. Moreover, this power control scheme is subject to delays and errors due to decoding the SINR information. Moreover, it is to be noted that the SINR respectively the experienced interference power at any node in a network is potentially different, i.e. channel reciprocity of TDD does not apply to interference levels. Prior art dealing with C/I power control assumes a single link and a separated feedback channel, which limits a system's capacity.

It is the object of the present invention to provide an improved concept to carry out power control in a TDD network.

This object is achieved by a transceiver apparatus of claim 1, a method for communicating according to claim 13, a transceiver apparatus according to claim 15, a method for communicating according to claim 25, a transceiver apparatus of claim 27 and a system for communicating according to claim 28.

The present invention is based on the finding that in TDD networks, channel reciprocity can be used to carry out power control, at least partly, implicitly. In a scenario where two network nodes communicate with each other, at least one link between the two can easily be power-controlled by adapting the transmission power on a first side of the link to a received interference power, so the second side of the link receives an implicit information on the interference on the first side within the received signal power. Since channel reciprocity can be used, knowledge of the interference power on the first side enables power adaption on the second side in order to achieve a certain SINR target on the first side. Other implicit signaling methods using timing-, frequency-, modulation symbol or other variations are also conceivable.

Moreover, the present invention is based on the finding that on the second side of the communication, power control can also be carried out, e.g. also implicitly once the above-mentioned link from the second to the first side has become stationary or stabilized. After having achieved stationary status, e.g. changes in the transmission power can be used to implicitly signal a desired transmission power adaptation for the first side in order to achieve a target SINR on the second side as well. In embodiments, power control on the second side can be based on implicit signaling or explicit signaling, where embodiments can carry out power control on the second side using explicit signaling while carrying out power control on the first side implicitly, i.e. in these embodiments the stationary status of the first side SINR is not assumed.

The present invention extends the work on Interference Tolerance Signaling using the TDD busy tone concept, e.g. in P. Omiyi, H. Haas, and G. Auer, "Interference tolerance signaling using busy-signal concept," EP2006/06009845.6, priority date: 24.05.2006 and A. Tyrrell, H. Haas, G. Auer, and P. Omiyi, "Decentralized Interference Avoidance Using Busy Bursts," in Proceedings of the International Conference on Communications ICC'07, Glasgow, UK, June 2007, where link adaptation based on power-based signaling is addressed. The notion of the busy tone concept can be generalized to a feedback or duplex link in embodiments of the present invention. An interesting observation of Tyrell, Haas, Auer and Omiyi, is found as it was shown that the power allocation of the feedback link follows the Foschini scheme of "A Simple Distributed Autonomous Power Control Algorithm and its Convergence". This means that the SINR at the transmitter, i.e. on the reverse link can be power controlled, while the forward link could be not. In the context of link adaptation this is a meaningful approach, as the capacity of the forward link is to be maximized, which is essentially different to power control.

A finding of the present invention is that the interference tolerance signaling of Omiyi, Haas, and G. Auer in "Interference Tolerance Signaling using Busy-Signal Concept" and Tyrrell, Haas, Auer and Omiyi in "Decentralized Interference Avoidance Using Busy Bursts" can be modified such that both forward and reverse link are C/I power controlled. Unlike in Foschini and Miljanic, the necessary signaling between transmitter and receiver can be based on the chosen transmit powers. The required measurements of the received signal powers of the target as well as the competing links, can be obtained entirely based on local knowledge at the mobile terminal, hence, some embodiments might not exchange any additional information. While the SINR targets may be arbitrarily set for all links, the SINR target of each receiver and transmitter pair could be the same, in some embodiments it is enough that they are known to both nodes of a link, although they might be different. On the other hand, no information about the SINR targets of other links might be needed. In embodiments a network constant can be assumed to be known at any entity in the network, e.g. as a system parameter or as well derivable from known values.

Embodiments of the present invention provide the advantage of an effective means to enhance the power efficiency of an ad hoc-, sensor- or multi hop network by means of decentralized pareto optimum or near optimum C/I power control. This means that the method may minimize or at least lower the transmit power to achieve a certain SINR target. Embodiments may be applicable to all networks where a feedback link is established. This includes a TDD setting as well as a low rate feedback link. A feedback link may be required for virtually all known power control schemes.

Embodiments may further provide the advantage that no additional signaling overhead (bandwidth) is needed due to implicit e.g. power-based signaling. Unlike other schemes the inventive methods may be supported only based on local knowledge about the observed received signal powers of the desired transmitters as well as interference from competing transmitters, further having low complexity and being easily implementable.

Embodiments may further be based on a single network constant. This constant could potentially be determined from a few known system parameters such as maximum transmit power, minimum transmit power, minimum and/or maximum absolute interference tolerance levels, etc. they may be derived from other known values as well.

Moreover, embodiments of the present invention provide the advantage of improved robustness, as the signaling can be considered "error" free if implicit, since it can be e.g. the received signal strength that determines the transmit power of a node. This remains true even when multiple signals are received simultaneously.

Embodiments of the present invention will be detailed below using the accompanying Figs. in which

Fig. 1     shows an embodiment of a transceiver apparatus;

Fig. 2     shows another embodiment of a transceiver apparatus;

Fig. 3     illustrates a communication scenario;

Fig. 4     illustrates another communication scenario and a time line of radio frames; and

Fig. 5     illustrates simulation results.

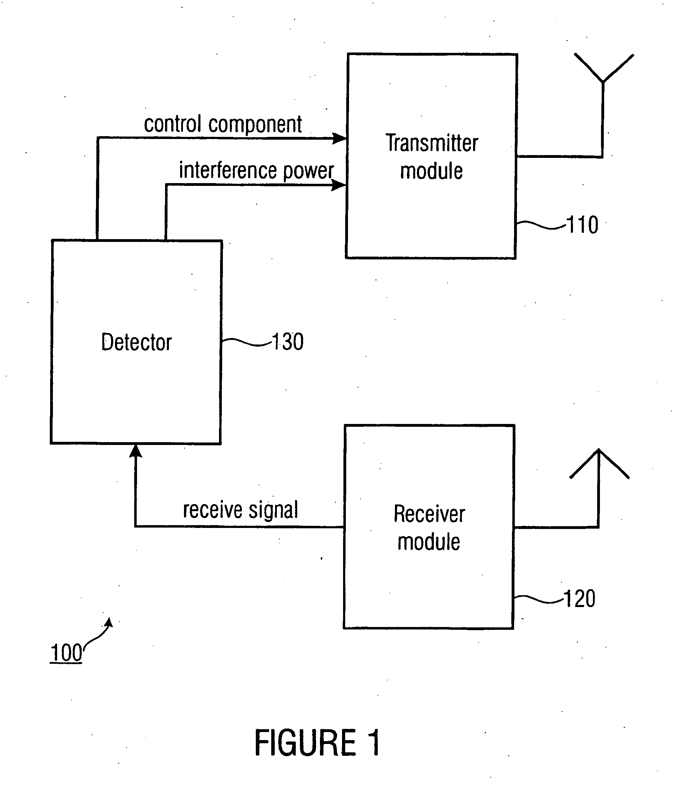

Fig. 1 shows a transceiver apparatus 100, which is operative for communicating with a communication partner in repetitive radio frames, a radio frame having a transmission time slot and a reception time slot. The transceiver apparatus 100 comprises a transmitter module 110 for transmitting a first transmit signal with a first transmission power during the transmission time slot of a first radio frame and for transmitting a second transmit signal with a second transmission power during the transmission time slot of a second radio frame. The transceiver apparatus 100 further comprises a receiver module 120 for receiving a receive signal having a control component depending on a reception quality of the first transmit signal at the communication partner and an interference component having an interference power during the reception time slot of the first radio frame.

The transceiver apparatus 100 further comprises a detector 130 for detecting the control component and the interference power from the receive signal. The transmitter module 110 is further adapted for transmitting during the transmission time slot of the second radio frame the second transmission signal with the second transmission power being dependent on the interference power such that a higher interference power results in a lower second transmission power and the second transmission power being dependent on the control component such that the second transmission power is lowered compared to the first transmission power when the control component indicates that a reception quality threshold is exceeded at the communication partner.

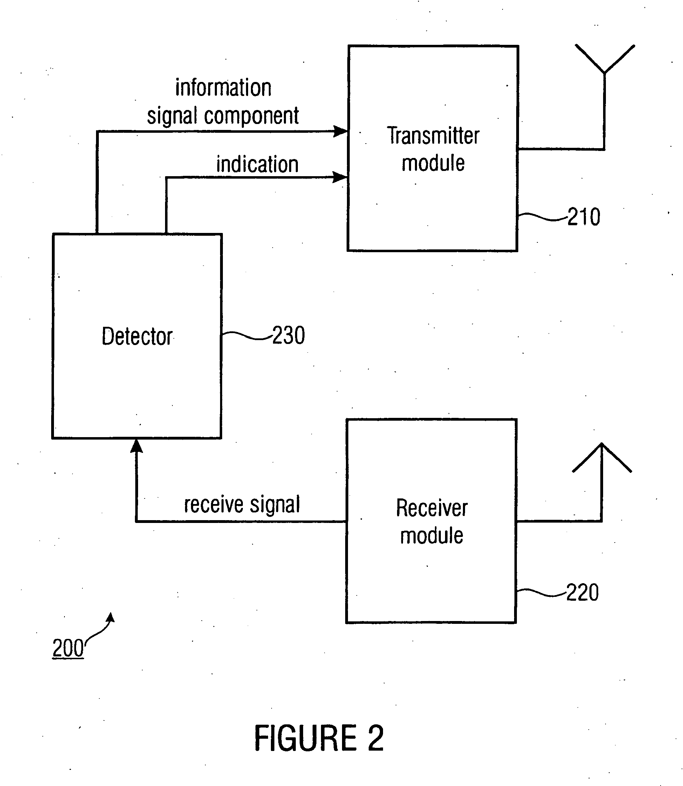

Fig. 2 depicts another transceiver apparatus 200. The transceiver apparatus 200 is operative for communicating with a communication partner in repetitive radio frames, a radio frame having a transmission time slot and a reception time slot. The transceiver apparatus 200 comprises a transmitter module 210 for transmitting a first transmit signal with a first transmission power during the transmission time slot of a first radio frame and for transmitting a second transmit signal with a second transmission power during the transmission time slot of a second radio frame. The transceiver apparatus 200 further comprises a receiver module 220 for receiving a receive signal having an information signal component with an information signal power and an interference component having an interference power during the reception time slot of the first radio frame.

The transceiver apparatus 200 further comprises a detector 230 for detecting the information signal power and the interference power from the receive signal and for determining an indication as to whether a relation between the information signal power and the interference power exceeds a threshold. The transmitter module 210 is further adapted for transmitting during the transmission time slot of the second radio frame, the second transmit signal with the second transmission power being dependent on the information signal power such that a higher information signal power results in a lower second transmission power and the second transmit signal further being dependent on the indication.

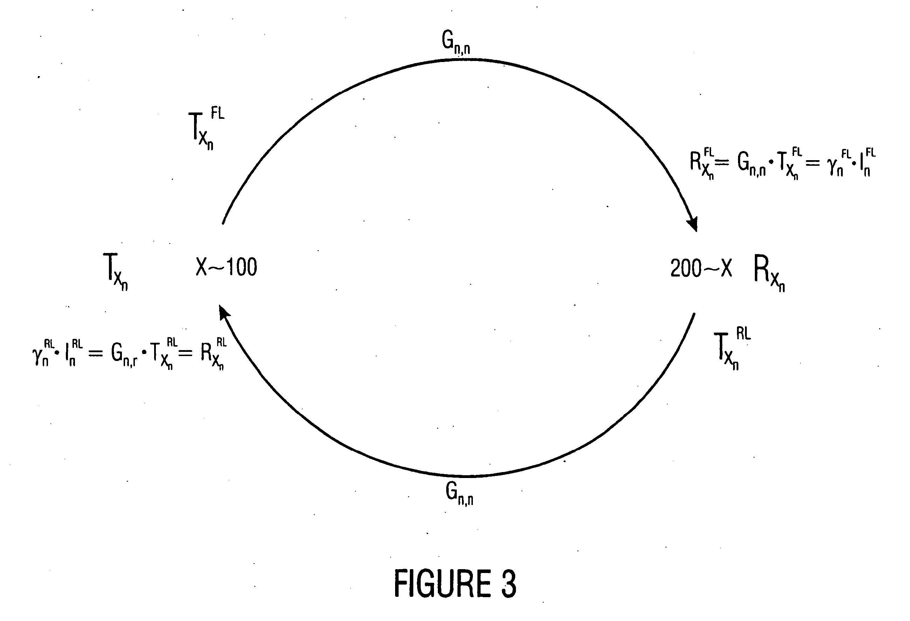

In order to further detail the transceiver apparatuses 100 and 200, Fig. 3 depicts an example communication scenario. Fig. 3 shows a transceiver apparatus 100, which is also labeled with $Tx_n$, in the following also referred to as transmitter. Moreover, Fig. 3 shows a transceiver apparatus 200, also labeled with $Rx_n$, which in the following will be referred to as receiver. In the following, two communication directions will be distinguished. The first direction is called forward link (FL = Forward Link), which refers to the communication direction from the transceiver apparatus 100 to the transceiver apparatus 200. The opposite direction will be referred to as reverse link (RL = Reverse Link), i.e. the communication direction from transceiver apparatus 200 to transceiver apparatus 100. The forward link is depicted at the top of Fig. 3, the reverse link is depicted at the bottom of Fig. 3. It is assumed that the two transceiver apparatuses 100 and 200 communicate in a TDD scenario with channel reciprocity, i.e. the channel between transceiver apparatus 100 and transceiver apparatus 200 is identical to the channel between the transceiver apparatus 200 and the transceiver apparatus 100, both referred to as $G_{n,n}$ in Fig. 3.

At first, the forward link is considered. It is assumed that $Tx_n$ transmits a signal with a transmit power of $T_n^{FL}$ through the channel $G_{n,n}$ to $Rx_n$, at which the reception power $R_n^{FL} = G_{n,n}T_n^{FL} = \gamma_n^{FL}I_n^{FL}$, wherein $\gamma_n^{FL}$ is the achieved SINR at the receiver $Rx_n$ and $I_n^{FL}$ is the received interference and noise power at $Rx_n$.

On the reverse link $Rx_n$ transmits with the transmission power of $T_n^{RL}$ through the same channel $G_{n,n}$, resulting in a reception power $R_n^{RL}(k) = G_{n,n}T_n^{RL} = \gamma_n^{RL}I_n^{RL}$, wherein $\gamma_n^{RL}$ is the achieved SINR at $Tx_n$ and $I_n^{RL}$ is the received interference and noise power at $Tx_n$.

According to the above, transceiver apparatus 100 adjusts its transmission power $T_n^{FL}$ dependent on the received interference and noise power $I_n^{RL}$. Therefore, transceiver apparatus 200 receives an implicit information on the interference power at transceiver apparatus 100 through its reception power $R_n^{FL}$. Furthermore, it can adapt its own transmission power $T_n^{RL}$ to the interference experienced at transceiver apparatus 100, so as to achieve a certain SINR at transceiver apparatus 100. Therefore, power control can be achieved for the reverse link, i.e. the SINR at the transceiver apparatus 100 is controlled. In order to also power control the SINR on the forward link, transceiver apparatus 200 includes an information as to whether the received SINR on the forward link is above a threshold.

Transceiver apparatus 100 receives said indication and can therefore adjust its transmission power. As transceiver apparatus 200 knows about the adjustment, the first power control loop is not affected.

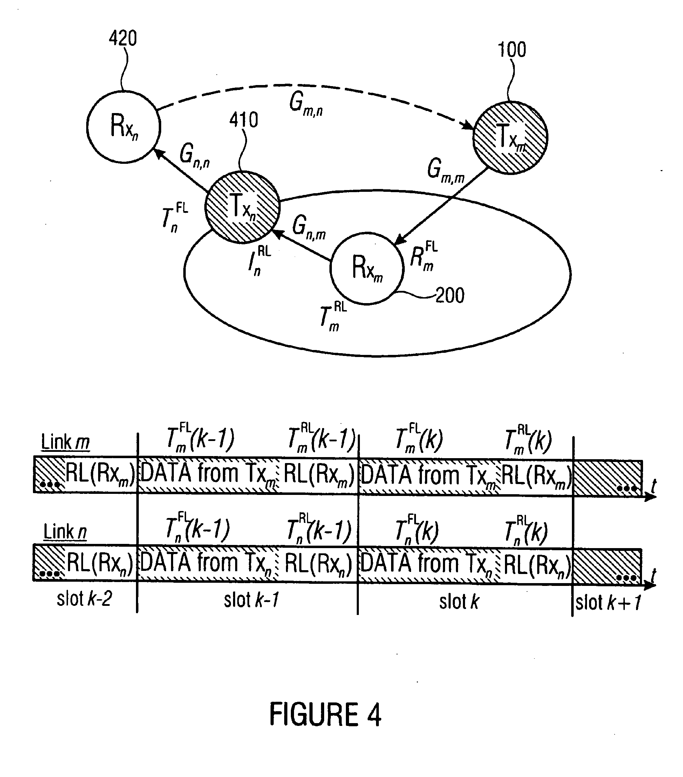

A more detailed scenario is depicted in Fig. 4. Fig. 4 shows a transceiver apparatus 100, also labeled $Tx_m$ and a transceiver apparatus 200, also labeled $Rx_m$. Moreover, Fig. 4 shows two other transceiver apparatuses 410 $Tx_n$ and 420 $Rx_n$. In addition, Fig. 4 shows, at the bottom thereof, a time line, illustrating two repetitive radio frames of the communication on links m and n, wherein link m is between $Tx_m$ and $Rx_m$ and link n is between $Tx_n$, also referred to as transceiver apparatus 410 and $Rx_n$, also referred to as transceiver apparatus 420. The two radio frames show that the network is synchronized, i.e. transmission and reception time slots on both links m and n are synchronized. Synchronization is not subject to the present invention. Methods for achieving synchronization as depicted in Fig. 4 are known from the prior art, for example, by means of firefly algorithms, e.g. EP1802013.

The diagram at the bottom of Fig. 4 illustrates the two radio links. It can be seen that each radio frame or radio slot comprises a transmission time slot for the forward link and a transmission time slot for the reverse link, a radio frame having a transmission time slot and a reception time slot as seen from either node of a communication link.

In the following a wireless network with 2$N$ nodes that are pairwise connected to form $N$ links is considered. Associated to each link is one transmitter Tx$_n$ and receiver Rx$_n$, $n=\{1,\cdots,N\}$ . A duplex link is considered where on the forward link (FL) Tx$_n$ transmits to Rx$_n$ and on the reverse link (RL) Rx$_n$ transmits to Tx$_n$. The objective of power control is to adjust the achieved SINR for all nodes so that a certain SINR target is met. A network where two links compete for resources, link $m$ from Tx$_m$ to Rx$_m$, and link $n$ from Tx$_n$ to Rx$_n$ is illustrated in Fig. 4. The achieved FL SINR at receiver Rx$_m$ on time instant $k$ can be defined as

$$\gamma_m^{\mathrm{FL}}(k) = \frac{R_m^{\mathrm{FL}}(k)}{I_m^{\mathrm{FL}}(k)} .$$

$$(2)$$

The received signal power from the intended transmitter Tx$_m$ that broadcasts with power $T_m^{\mathrm{FL}}(k)$ is given by

$$R_m^{\mathrm{FL}}(k) = G_{m,m} \cdot T_m^{\mathrm{FL}}(k) ,$$

$$(3)$$

whereas the interference power is in the form

$$I_m^{\mathrm{FL}}(k) = \sum_{n \neq m} G_{n,m} \cdot T_n^{\mathrm{FL}}(k) + N_0 ,$$

$$(4)$$

where $N_0$ is the noise floor. In general, the channel gain $G_{m,n} \neq G_{n,m}$ as $G_{n,m}$ stands for Tx$_n$ and Rx$_m$ (i.e., the first index always specifies a *FL transmitter*, whereas the second index specifies a *FL receiver*). As a consequence, each link is characterized by a single and unique gain. This notation can be employed due to the channel reciprocity of TDD systems, the link from Rx$_m$ to Tx$_n$ has the same gain as the link from Tx$_n$ to Rx$_m$.

On the reverse link, Rx$_m$ actually acts as a transmitter, while the FL transmitter Tx$_m$ acts as a receiver. The achieved SINR at Tx$_m$ is defined by

$$\gamma_m^{\mathrm{RL}}(k) = \frac{R_m^{\mathrm{RL}}(k)}{I_m^{\mathrm{RL}}(k)} ,$$

$$(5)$$

whereas received signal power observed at Tx$_m$ from the intended transmitter Rx$_m$ and the interference are given by

$$R_m^{\mathrm{RL}}(k) = G_{m,m} \cdot T_m^{\mathrm{RL}}(k) ,$$

$$(6)$$

and

$$I_m^{\mathrm{RL}}(k) = \sum_{n \neq m} G_{m,n} \cdot T_n^{\mathrm{RL}}(k) + N_0 . \qquad (7)$$

The FL and RL power at time instant $k$ can be determined according to the following two key equations

$$T_m^{\mathrm{FL}}(k) = \frac{C}{I_m^{\mathrm{RL}}(k-1)} \qquad (8)$$

and

$$T_m^{\mathrm{RL}}(k) = \min\left\{ \frac{C}{R_m^{\mathrm{FL}}(k)} \cdot \Gamma_m , Tmax \right\} , \qquad (9)$$

where $C$ is a constant, assumed to be known in the entire network. The unit of $C$ is [$W^2$]. One way to determine a value of $C$ is as follows

$$C = Imin \cdot Tmax , \qquad (10)$$

where $Tmax$ is the maximum transmit power and $Imin = N_0$ is the receiver sensitivity, which can be set equal to the noise floor

$$Imin = N_0 = kB \cdot \vartheta \cdot B , \qquad (11)$$

where $kB$ is the Boltzmann constant in Joules per Kelvin, $\vartheta$ is the ambient temperature in Kelvin, and $B$ is the bandwidth in Hertz.

To motivate the choice of the FL and RL powers in (8) and (9), the achieved RL SINR can be considered. According to (9) two cases need to be distinguished, whether $Rx_m$ transmits with maximum power $Tmax$ or not.

An interesting observation can be induced from (9), in case $T_m^{\mathrm{RL}}(k) < Tmax$, , then

$$T_m^{\mathrm{RL}}(k) \cdot R_m^{\mathrm{FL}}(k) = C \cdot \Gamma_m . \qquad (12)$$

With $R_m^{\mathrm{FL}}(k) = G_{m,m} \cdot T_m^{\mathrm{FL}}(k) = G_{m,m} \cdot C / I_m^{\mathrm{RL}}(k-1)$ from (9) and $T_m^{\mathrm{RL}}(k) = R_m^{\mathrm{RL}}(k) / G_{m,m}$ from (8), we obtain

$$\frac{R_m^{RL}(k)}{I_m^{RL}(k-1)} = \Gamma_m \quad . \tag{13}$$

Hence, as long as $Rx_m$ does not transmit with maximum power, and provided that $I_m^{RL}(k-1) = I_m^{RL}(k)$, the SINR at the transmitter is exactly the SINR target $\Gamma_m$. This effectively means that in a stable state with $I_m^{RL}(k-1) = I_m^{RL}(k)$, the RL power approaches exactly the SINR target.

It might happen that a stable state is only reached when the RL power approaches its maximum. Then $T_m^{RL}(k) = Tmax$ and from (9)

$$Tmax \le \frac{C}{R_m^{FL}(k)} \cdot \Gamma_m \quad . \tag{14}$$

As $R_m^{FL}(k) = G_{m,m} \cdot C/I_m^{RL}(k-1)$ and $Tmax = R_m^{RL}(k)/G_{m,m}$, (14) can be transformed to

$$\frac{R_m^{RL}(k)}{I_m^{RL}(k-1)} \le \Gamma_m \quad , \tag{15}$$

with equality for $R_m^{FL}(k) = \Gamma_m N_0$, i.e. the received signal power of the FL receiver $Rx_m$ (transmitter of the RL signal) is exactly $N_0$ above the noise floor. In all other cases the SINR target is never met, when $T_m^{RL}(k) = Tmax$. In turn, if the SINR target cannot be achieved, $\gamma_m^{RL}(k) < \Gamma_m$, the RL transmitter $T_m^{RL}(k)$ will always emit with maximum power $Tmax$. Conditions for which $\gamma_m^{FL}(k) < \Gamma_m$ and therefore $T_m^{RL}(k) = Tmax$ are derived in A. Tyrrell, H. Haas, G. Auer, and P. Omiyi, "Decentralized Interference Avoidance Using Busy Bursts," in Proceedings of the International Conference on Communications ICC'07, Glasgow, UK, June 2007.

Equations (13) and (15) imply that the FL transmitter is effectively notified whether the chosen SINR target at the receiver (transmitter of the RL signal) is met or not.

As closed form expressions for the achieved SINR $\gamma_m^{FL}(k)$ on the forward link produce unwieldy equations, an upper and lower bound of $\gamma_m^{FL}(k)$ are derived in the following.

In case $T_m^{RL}(k) < Tmax$ the RL power $T_m^{RL}(k)$ is entirely controlled by the received signal on the forward link $R_m^{FL}(k)$ in (9). Inserting (9) into the expression for $\gamma_m^{FL}(k)$ in (2) and exploiting $C=N_0 \cdot Tmax$ yields

$$\frac{\gamma_m^{FL}(k)}{\Gamma_m} = \frac{N_0}{I_m^{FL}(k)} \cdot \frac{Tmax}{T_m^{RL}(k)} \cdot \qquad (16)$$

As $I_m^{FL}(k) \geq N_0$ and $T_m^{RL}(k) \leq Tmax$, the achieved SINR is bounded by

$$\frac{N_0}{I_m^{FL}(k)} \leq \frac{\gamma_m^{FL}(k)}{\Gamma_m} \leq \frac{Tmax}{T_m^{RL}(k)} \cdot$$

In case of low interference $N_0/I_m^{FL}(k) \to 1$ the SINR is likely to be overachieved as $\gamma_m^{FL}(k)/\Gamma_m \geq 1$.

On the other hand, when the RL powers are high so $Tmax/T_m^{RL}(k) \to 1$, the SINR target is typically not met as now $\gamma_m^{FL}(k)/\Gamma_m < 1$.

As indicated in (16) the SINR target for $T_m^{RL}(k) = Tmax$ can only be met if there is no interference, $I_m^{FL}(k) = N_0$. Moreover, similar to the RL SINR, a further condition is that $R_m^{FL}(k) = N_0\Gamma_m$, i.e. the received signal power is exactly $\Gamma_m$ over the noise floor. This implies that the FL SINR can only be achieved when the RL SINR is met.

The power efficiency of C/I power control is drastically improved if links with $T_m^{RL}(k) = Tmax$ are dropped. As these links neither meet their SINR target on the reverse nor on the forward link according to (15) and (16), but induce much of the interference in the network, it is reasonable if a link $m$ with $T_m^{RL}(k) = Tmax$ is disconnected (on both forward and reverse link). This may apply to all embodiments of C/I power control.

Convergence of decentralized power allocation schemes has been studied for a general class of algorithms by K. K. Leung et al. Within this class falls the algorithm proposed by Foschini, where a transmitter $Tx_m$ updates its transmit power according to (1)

$$T_m(k) = \frac{\Gamma_m}{\gamma_m(k-1)} \cdot T_m(k-1) ,$$

where $\Gamma_m$ and $\gamma_m(k)$ denote the target and the achieved measured SINR of the corresponding receiver $Rx_m$, respectively.

Substituting $I_m^{RL}(\cdot) = R_m^{RL}(\cdot)/\gamma_m^{RL}(\cdot)$ and $R_m^{RL}(\cdot) = G_{m,m}T_m^{RL}(\cdot)$ into (15) we obtain

$$T_m^{RL}(k) = \frac{\Gamma_m}{\gamma_m^{RL}(k-1)} \cdot T_m^{RL}(k-1) \qquad (17)$$

The update of the RL powers is exactly the same as the equation used to control the transmit power in (1). Therefore the convergence and stability analysis that was conducted for a system using (1) can be directly applied, the RL power always converges, and, as the FL power control rule is solely determined by the RL power (9), consequently the FL power converges, too. Hence the interference tolerance signaling scheme falls into the class of algorithms analyzed by K. K. Leung et al. It has been shown that the power allocation of (1) is a *Pareto optimal solution,* in the sense that any other set of transmit powers $\{T_m\}$ satisfying (1) would require as much power from every transmitter. On the other hand, the FL power does not converge to this Pareto optimal power allocation, only the RL power does.

In the previous section it was shown that if (8) and (9) are met, the reverse link can be perfectly power controlled, as it follows the Foschini scheme. In this section, both (8) and (9) are modified such that the forward link can become also C/I power controlled. The key to FL power control is to reduce the transmit powers of those links that overachieve their SINR target. Apart from the obvious advantage of improved power efficiency, the number of links that achieve their SINR target may be increased, as the lowered transmit power will reduce interference towards competing links. As the transmitter cannot know whether the SINR target is overachieved or not, some sort of signaling between receiver and transmitter on the reverse link appears necessary. One solution is to explicitly signal the ratio between measured and target SINR at time instant *k*, defined by $\Delta\gamma_m(k) = \gamma_m^{FL}(k)/\Gamma_m$.    Then the FL transmitter Tx$_m$ adjusts its transmit power by modifying (8) according to

$$T_m^{FL}(k) = \frac{C}{I_m^{RL}(k-1)\cdot\Sigma_m(k-1)}; \qquad \begin{aligned} \Sigma_m(k) &= \frac{\gamma_m^{FL}(k)}{\Gamma_m}\cdot\Sigma_m(k-1) \\ \Sigma_m(0) &= 1 \end{aligned}, \qquad (18)$$

where $\Sigma_m(k$-1) is signaled from the receiver in the previous slot *k*-1. The transmit power $T_m^{FL}(k)$    is reduced by $\Sigma_m$ (*k*) so to match the achieved with the target SINR. With (18) the FL powers can now be iteratively updated according to

$$T_m^{FL}(k) = \frac{I_m^{RL}(k-2)}{I_m^{RL}(k-1)}\cdot\frac{\Gamma_m}{\gamma_m^{FL}(k-1)}\cdot T_m^{FL}(k-1). \qquad (19)$$

Hence given the RL power allocation is in a steady state so $I_m^{RL}(k-1) = I_m^{RL}(k-2)$,    the forward link now also follows (1) , and is therefore optimally C/I power controlled.

It can be noted that the adjustment of $T_m^{FL}(k)$    by $\Sigma_m(k$-1) in (18) results in a reduced received power of

$R_m^{FL}(k) = G_{m,m}\cdot T_m^{FL}(k)$,    which in turn would cause an increase of the RL power $T_m^{RL}(k)$    in (9). As the RL power allocation of $T_m^{RL}(k)$    should not be affected by the introduction of $\Sigma_m(k$-1), (9) is to be modified according to

$$T_m^{RL}(k) = \min\left\{\frac{C}{R_m^{FL}(k)}\cdot\frac{\Gamma_m}{\Sigma_m(k-1)}, Tmax\right\} \qquad (20)$$

so that the introduced $\Sigma_m(k$-1) term compensates the drop of $R_m^{FL}(k)$    by the adjustment of $T_m^{FL}(k)$    in (18) . This

ensures that *all* RL powers $T_m^{RL}(k)$ and therefore also $I_m^{RL}(k)$ in (18) remain unchanged.

In the previous section FL power control was achieved by embodiments utilizing explicit signaling. To entirely avoid any explicit signaling, embodiments using implicit power-based signaling are introduced in the following.

The basic principle of the FL power adjustment from (18) and (20) still apply. The open issue of power-based signaling of $\Sigma_m(k)$ is addressed by reduction of the RL power in the following. In other embodiments any variation of the RL power, which is predefined and known to both the transmitter and the receiver may be utilized to signal a desired change in the FL power in order to achieve the FL target SINR. Suppose on link m the SINR target is not met, then the RL power can e.g. be adjusted by the accumulated product sum of $\Delta T_m(k)$, that is

$$T_m^{RL}(k) = \min\left\{\frac{C}{R_m^{FL}(k)} \cdot \frac{\Gamma_m}{\Sigma_m(k)}, Tmax\right\}; \quad \begin{aligned} \Sigma_m(k) &= \Delta T_m(k) \cdot \Sigma_m(k-1) \\ \Sigma_m(0) &= 1 \end{aligned} \qquad (21)$$

Unlike the explicit power compensation in (20), the adjustment term $\Sigma_m(\cdot)$ may *not* be delayed by one slot in (21). Suppose that the transmitter is able to estimate and compensate for $\Sigma_m(k-1)$ according to (18), then the RL power $T_m^{RL}(k)$ in (21) will experience a drop by $\Delta T_m(k)$. The effect of this power drop enables the FL transmitter to estimate $\Delta T_m(k)$. On the other hand, the drop of $T_m^{RL}(k)$ affects competing links, as the interference $I_n^{RL}(k)$ reduces accordingly. To avoid instability, $\Delta T_m(k)$ is to be chosen somewhat smaller than the ratio between achieved and target SINR $\gamma_m^{FL}(k)/\Gamma_m$. In some embodiments one way to choose the power increment is to set $\Delta T_m(k)$ in dB proportional to the ratio between measured and target SINR. In the linear domain this results to

$$\Delta T_m(k) = \left(\frac{\gamma_m^{FL}(k)}{\Gamma_m}\right)^a, \quad a \le 1 \qquad (22)$$

Typically $a<1$ is necessary to avoid instabilities. Simulations suggest that reasonable values are in the range $a = \left[\frac{1}{10}, \frac{1}{2}\right]$. The adjustment of $\Delta T_m(k)$ in (22) is only an example. In general, embodiments may choose any value in the range $\Delta T_m(k) = [1, \gamma_m^{FL}(k)/\Gamma_m]$. However, to avoid instability $\Delta T_m(k)$ should be significantly smaller than the upper limit $\gamma_m^{FL}(k)/\Gamma_m$.

Provided that $T_m^{RL}(k) < T$, according to (9) the RL power $T_m^{RL}(k)$ is fully determined by the forward link. Hence, any adjustment of $T_m^{RL}(k)$ that is due to $\Delta T_m(k)$ can be easily detected by $Tx_m$. Suppose the FL transmitter has estimated the power adjustment of time instant k-1, denoted by $\hat{\Sigma}_m(k-1)$. Repeating the derivation of the achieved RL SINR from above, including the power adjustments of the FL transmitter $\hat{\Sigma}_m(k-1)$ in (18), and the RL transmitter $\Sigma_m(k)$ in (21), the following is obtained

$$\frac{R_m^{\text{RL}}(k)}{I_m^{\text{RL}}(k-1)} = \Gamma_m \cdot \frac{\hat{\Sigma}_m(k-1)}{\Sigma_m(k)}, \qquad \text{if} \quad T_m^{\text{RL}}(k) = \frac{C}{R_m^{\text{FL}}(k)}\Gamma_m \le Tmax.$$

As $\Gamma_m$ and $\hat{\Sigma}_m(k-1)$ are known to the RL receiver (as it is the same physical entity as the FL transmitter), it is possible to estimate $\Sigma_m(k)$ by computing

$$\Sigma_m(k) = \frac{I_m^{\text{RL}}(k-1)}{R_m^{\text{RL}}(k)} \cdot \Gamma_m \cdot \hat{\Sigma}_m(k-1) \qquad (23)$$

This relation establishes an implicit signaling of the amount of the SINR at the receiver that is overachieved. The FL power can be adjusted according to (18) by replacing $\hat{\Sigma}_m(k)$ with its estimate

$$T_m^{\text{FL}}(k+1) = \frac{C}{I_m^{\text{RL}}(k) \cdot \hat{\Sigma}_m(k)} \qquad (24)$$

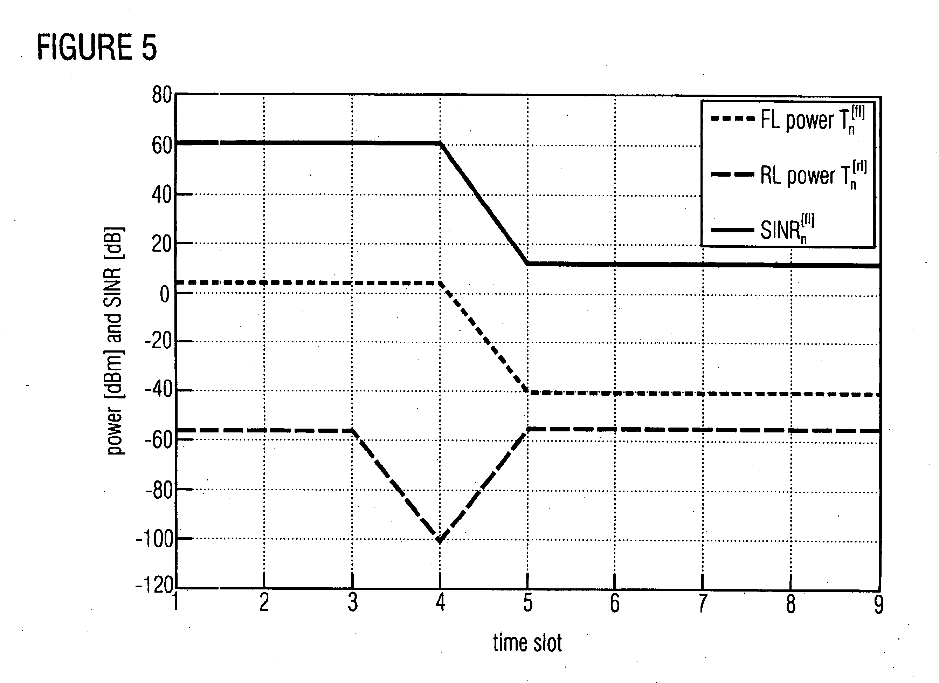

How the ratio between the measured and target SINR, $\Delta\gamma_m = \gamma_m^{\text{FL}}(k)/\Gamma_m$, can be determined implicitly is shown in Fig. 5. Fig. 5 shows viewgraphs of the FL SINR at the top, the RL power at the bottom and the FL power in between, where the viewgraphs are displayed along a time axis comprising 9 consecutive time slots. The target SINR $\Gamma_m$ is set to 15dB. In the first three time slots, the effective SINR is overachieved by 45dB, and both transmitter and receiver transmit with constant power. At time slot 4, the receiver follows the new scheme described by (21), which causes it to abruptly lower its transmit power. At time slot 5, the FL transmitter can determine $\Delta\gamma_m(4)$ by comparing the received RL power at time slot 3 with the one at time slot 4. Based on this, it lowers its transmit power based on (18). In the following time slots, the target SINR $\Gamma_m$ is exactly met.

In case the RL power is maximum $T_m^{\text{RL}}(k) = Tmax$, according to (15) the SINR target is not met. However, the estimation of (23) strictly requires that $T_m^{\text{RL}}(k) = \frac{C}{R_m^{\text{FL}}(k)}\Gamma_m \le Tmax$. This means that if $T_m^{\text{RL}}(k) = Tmax$ the power adjustment term $\hat{\Sigma}_m(k)$ in (23) is overestimated $\hat{\Sigma}_m(k) > \Sigma_m(k)$. A "sanity check" for the FL transmitter that $T_m^{\text{RL}}(k) < Tmax$ is to compute the ratio between two successive RL signals $\frac{R_m^{\text{RL}}(k)}{R_m^{\text{RL}}(k-1)}$. In case $\frac{R_m^{\text{RL}}(k)}{R_m^{\text{RL}}(k-1)} = 1$ and $\hat{\Sigma}_m(k) > \hat{\Sigma}_m(k-1)$ from (23), it is clear that $T_m^{\text{RL}}(k) = Tmax$, and therefore the update of $\hat{\Sigma}_m(k)$ should be discarded. Indeed, in this case any $\hat{\Sigma}_m(k) \ne 1$ should be reset to $\hat{\Sigma}_m(k) = 1$, since the implicit signaling is no longer applicable.

In many cases, a chosen SINR target $\Gamma_m$ can be too ambitious, due to mutual interference between interfering links. Disconnecting a link that cannot achieve $\Gamma_m$ is one viable option carried out by embodiments, where the whole network benefits from reduced interference, which in turn reduces the required transmit powers to meet a certain $\Gamma_n$ on other links. In embodiments a sufficient criterion to disconnect a link may be when RL transmitter emits with maximum

power $T_m^{\mathbf{RL}}(k) = Tmax$ . Lowering the SINR target $\Gamma_m$ can be also a valid alternative.

In turn (24) can be further reduced, until either $T_m^{\mathbf{FL}}$ will approach zero, or the receiver can no longer detect a signal, which eventually causes the link to be dropped. So, in case $T_m^{\mathbf{RL}}(k) = T^{\mathbf{RL}}$ the SINR of the transmitter does not follow the Foschini scheme in (1). This is not a problem, however, as the SINR target at the receiver is also not met. In fact, by dropping links which cannot reach their SINR target and transmit with maximum RL power, the overall power efficiency is improved, as the decreased interference enables other nodes to reduce their transmit power.

In summary embodiments may initiate the power modification by $\Sigma_m(k)$ only if the RL power allocation has reached a steady or stable state, so $T_m^{\mathbf{RL}}(k) \approx T_m^{\mathbf{RL}}(k-1)$ . It may be reasonable to upper bound the power adjustment in (21) by $\Delta T_m(k) \leq \Gamma_m$, so that values are in the range $\Delta T_m(k) = [1, \min\{\gamma_m^{\mathbf{FL}}(k)/\Gamma_m, \Gamma_m\}]$ . This can ensure that the reverse link signal can still be detected at the receiver, i.e. the SINR is above the noise floor (or a certain minimum SINR). For obvious reasons, a power adjustment should only be initiated by the RL transmitter $Rx_m$, if it does not already transmit with maximum power, so $T_m^{\mathbf{RL}}(k) < T$ in some embodiments.

Embodiments may, to speed up convergence, enforce condition $\Sigma_m(k) \geq 1$ which guarantees that power adjustment in (18) only results in a power reduction. Then convergence can typically be achieved after two iterations. However, this affects the optimality of the FL power control. Moreover it may be reasonable to upper and lower bound the changes in transmit powers $\dfrac{T_m^{\mathbf{FL}}(k)}{T_m^{\mathbf{FL}}(k-1)}$ and $\dfrac{T_m^{\mathbf{RL}}(k)}{T_m^{\mathbf{RL}}(k-1)}$, so to limit the transient behavior of the network in case of entering or disconnecting links. For embodiments using the explicit signaling of the power adjustments $\Sigma_m(k)$, a one bit feedback from Tx to Rx may be sufficient which indicates "power-up" or "power down".

In embodiments the power allocation rules of (8) and (9) could be swapped, such that (9) determines the FL power and (8) the RL power. In other words, the terms FL and RL could be interchanged. Moreover, embodiments provide the advantage that C/I power control on a *duplex link* is enabled. Embodiments may even achieve optimal C/I power control. Multiple embodiments are conceivable, e.g. link adaptation utilizing the busy signal concept and also using full duplex communication links. Regarding C/I power control on the forward link, both explicit and/or implicit adjustment of C/I power control can be carried out by embodiments. Embodiments may make use of the introduction of the FL power adjustment term $\Sigma_m$ in (18) and (20), which is applicable to all considered options. Furthermore, embodiments may comprise a means for implicit power-based signaling of $\Sigma_m$, and/or a means for estimation at the transmitter.

According to the above detailed embodiments, in embodiments of the transceiver apparatus 100, the receiver module 120 can be adapted for receiving the receive signal comprising an information signal and, correspondingly, the detector 130 may be adapted for detecting the information signal. In other embodiments, the detector 130 can be adapted for determining the control component explicitly by means of at least one of or a combination of the group of a code bit, a code word, a code or a modulation symbol. In these embodiments, for example, an extra bit or a group of bits may be included in a transmit signal transmitted by the communication partner. The detector 130 can then be adapted to detect said bit or group of bits in order to determine the control component.

In other embodiments, the detector 130 can be adapted for extracting the control component by detecting the control component implicitly from the receive signal by means of at least one of or a combination of the group of a reception power, a signal-to-noise ratio, a signal-to-interference-and-noise ratio, a channel state information, a timing, a frequency or offsets therefrom. In embodiments, for example, the control component, can be signaled implicitly, for example, by changes in the reception power, etc.

Moreover, in embodiments in the detector 130 may be adapted for detecting a binary control component from the receive signal, the binary control component indicating whether the reception quality is exceeded at the communication partner, i.e. carrying an information as to whether the transmit power should be increased or decreased. The transmitter module 110 can be adapted for changing the second transmission power step-wise with respect to the first transmission power depending on the binary control component. In such embodiments, step sizes can be predetermined and known to the transceiver apparatus 100 and the communication partner. In one embodiment, the detector 130 detects an up or down information as control component indicating to the transmitter module 110 whether to increase or decrease the second transmission power, for example, in steps of +/-1dB.

In another embodiment, the detector 130 can be adapted for determining the control component by comparing a reception power of the information signal during the reception time slot of the first radio frame with another reception power of another information signal of an earlier radio frame. In such embodiments, the control component can be signaled implicitly by reception power variations or offsets.

The detector 130 can be further adapted for determining the control component only if a number of reception powers in a number of reception time slots during a number of earlier radio frames did not differ more than a stationary threshold. In these embodiments, it is assumed that the reception power has reached a stationary state, i.e. the power control loop for the SINR of the reverse link is already stable. This can be determined, for example, by the detector 130 comparing reception powers in reception time slots of consecutive radio frames and by determining a variation in said reception powers. If the variations do not exceed a certain threshold, the power control loop for the reverse link can be considered stationary. In one embodiment, said threshold would be one or two dB.

In another embodiment, the detector 130 can be adapted for detecting, as control information, a difference between reception powers of the information signals of the first and the earlier radio frame and the transmitter module 110 can be adapted for applying said difference or a scaled version thereof to the second transmission power when compared to the first transmission power. In a further embodiment, instead of a difference, a relation in terms of a factor can be determined between the reception powers of the information signal of the first and the earlier radio frames and, accordingly, the transmitter module 110 can be adapted for applying the relation or factor or a scaled version thereof to the second transmission power when compared to the first transmission power.

Generally, in an embodiment, the interference signal power received in a first radio frame can be noted by I(k-1) , k is the current radio frame, C can be a constant and Y(k-1) can be the information on the reception quality with the transmitter module being adapted for adjusting the second transmission power according to T(k)=C/(I(k-1)(Y(k-1)). In embodiments the transmitter module 110 can be adapted for cancelling the transmission when having transmitted with a maximum transmission power during a number of earlier radio frames, in order to prevent excessive interference, instability etc.

In embodiments of the transceiver apparatus 200, the transmitter module 210 can be adapted for transmitting transmit information data during the transmission time slots. In embodiments, the transceiver apparatus 200 may accordingly transmit payload data as transmit information data, establishing a duplex link. In another embodiment, the reverse link may only be used to transmit control data, i.e. an information on the indication.

The transmitter module 210 may be further adapted for including the indication explicitly in the second transmit signal by means of at least one of or a combination of the group of a code bit, a code word, a code or a modulation symbol. According to the above embodiment, an up or down information may be included in the second transmission signal. In other embodiments, a more detailed information may be included, for example, in terms of a step-width, which the corresponding receiving transceiver apparatus 100 should apply to its transmission power.

The transmitter module 210 may be further adapted for including the indication implicitly in the second transmit signal by means of one of or a combination of the group of a transmission power, a channel state information, a timing, a frequency or offsets therefrom. According to the above described embodiments, the transceiver apparatus 200 may signal implicitly, for example, by means of a change of its transmission power, etc.

Furthermore, the transmitter module 210 may be adapted for including a binary indication in the second transmission signal, the binary indication indicating whether the relation exceeds the threshold. In these embodiments, the detector 230 may determine a SINR received on the forward link and comparing same to a threshold. From said comparison, an up or down indication may be created, in other embodiments, a more detailed information on a step size can be utilized. The detector 230 may be adapted for comparing the ratio of the information signal power and the interference power to a desired ratio and for determining a difference or a factor between the ratio and the desired ratio and, in turn, the transmitter module 210 may be adapted for implicitly or explicitly including the difference or factor or a scaled version thereof in the second transmit signal. In embodiments, the difference or factor or a scaled version thereof may be applied to the second transmission power.

In other embodiments, the transmitter module 210 can be adapted for only applying the difference or factor or a scaled version thereof to the second transmission power if a number of transmission powers during a number of earlier radio frames did not differ more than a stationary threshold. In this embodiment, it may again be assumed that the first transmission loop for the signal-to-interference-and-noise ratio on the reverse link is already in a stable state.

In one embodiment, the detector 230 can be adapted for detecting the information signal power R, the interference power I, Y = R/I as an achieved SINR and the transmitter module 210 can be adapted for using a second transmission power T,

$$T = \min \{ C/R \cdot \Gamma/Y, \ T_{max} \}$$

wherein $\Gamma$ is a desired SINR, C is a constant, Y lies in $[1, \gamma/\Gamma]$ and $T_{max}$ is the maximum transmission power of the transmitter module 210.

In other embodiments, a transceiver apparatus may comprise features of the transceiver apparatus 100 and features of the transceiver apparatus 200. As in an ad hoc-, sensor- or multi hop network, all nodes can potentially communicate with all other nodes, the nodes all could potentially behave either as transceiver apparatus 100 or as transceiver apparatus 200 dependent on a certain communication scenario.

Embodiments may also establish systems for communicating in repetitive radio frames comprising at least a transceiver apparatus 100 and a transceiver apparatus 200.

Depending on certain implementation requirements of the inventive methods, the inventive methods can be implemented in hardware or in software. The implementation can be performed using a digital storage medium, in particular, a disc, a DVD or a CD having electronically-readable control signals stored thereon, which co-operate with programmable computer systems such that the inventive methods are performed. Generally, the present invention is therefore a computer program product with a program code stored on a machine-readable carrier, the program code being operated for performing the inventive methods when the computer program product runs on a computer. In other words, the inventive methods are, therefore, a computer program having a program code for performing at least one of the inventive methods when the computer program runs on a computer.

List of Reference Signs

100    Transceiver apparatus
110    Transmitter module
120    Receiver module
130    Detector
200    Transceiver apparatus
210    Transmitter module
220    Receiver module
230    Detector
410    Other transceiver apparatus
420    Other transceiver apparatus

**Claims**

1.  Transceiver apparatus (100) operative for communicating with a communication partner (200) in repetitive radio frames, a radio frame having a transmission time slot and a reception time slot, comprising:

    a transmitter module (110) for transmitting a first transmit signal with a first transmission power during the transmission time slot of a first radio frame and for transmitting a second transmit signal with a second transmission power during the transmission time slot of a second radio frame;
    a receiver module (120) for receiving a receive signal having a control component depending on a reception quality of the first transmit signal at the communication partner (200) and an interference component having an interference power during the reception time slot of the first radio frame at the transceiver apparatus (100); and
    a detector (130) for detecting the control component and the interference power from the receive signal;
    wherein the transmitter module (110) is adapted for transmitting during the transmission time slot of the second radio frame the second transmit signal with the second transmission power being dependent on the interference power and the control component;
    the second transmission power being dependent on the interference power such that a higher interference power results in a lower second transmission power and the second transmission power being dependent on the control component such that the second transmission power is lowered compared to the first transmission power when the control component indicates that the reception quality threshold is exceeded at the communication partner (200).

2.  Transceiver apparatus (100) of claim 1, wherein the receive signal comprises an information signal and wherein the detector (130) is adapted for detecting the information signal.

3.  Transceiver apparatus (100) of one of the claims 1 or 2, wherein the detector (130) is adapted for determining the control component explicitly by means of at least one of or a combination of the group of a code bit, a code word, a code or a modulation symbol.

4. Transceiver apparatus (100) of one of the claims 1 to 3, wherein the detector (130) is adapted for extracting the control component by detecting the control component implicitly from the receive signal by means of at least one of or a combination of the group of a reception power, a signal-to-noise ratio, a signal-to-noise-and-interference ratio, a channel state information, a timing, a frequency or offsets therefrom.

5. Transceiver apparatus (100) of one of the claims 3 or 4, wherein the detector (130) is adapted for detecting a binary control component from the receive signal, the binary control component indicating whether the reception quality is exceeded.

6. Transceiver apparatus (100) of claim 5, wherein the transmitter module (110) is adapted for changing the second transmission power stepwise with respect to the first transmission power dependent on the binary control component.

7. Transceiver apparatus (100) of one of the claims 2 to 6, wherein the detector (130) is adapted for determining the control component by comparing a reception power of the information signal during the reception time slot of the first radio frame with another reception power of another information signal of an earlier radio frame.

8. Transceiver apparatus (100) of claim 7, wherein the detector (130) is adapted for determining the control component only if a number of reception powers in a number of reception time slots during a number of earlier radio frames did not differ more than a stationary threshold.

9. Transceiver apparatus (100) of one of the claims 7 or 8, wherein the detector (130) is adapted for detecting, as control component, a difference between the reception powers of the information signals of the first and the earlier radio frame or a scaled version thereof, and wherein the transmitter module (110) is adapted for applying the difference or the scaled version thereof to the second transmission power when compared to the first transmission power.

10. Transceiver apparatus of one of the claims 7 or 8, wherein the detector (130) is adapted for detecting, as control component, a relation or a factor or a scaled version thereof between the reception powers of the information signals of the first and the earlier radio frame, and wherein the transmitter module (110) is adapted for applying the relation or the factor or the scaled version thereof to the second transmission power when compared to the first transmission power.

11. Transceiver apparatus (100) of one of the claims 1 to 10, wherein the interference signal power is $I(k-1)$, $k$ is the current radio frame, C is a constant and $Y(k-1)$ is the information on the reception quality and wherein the transmitter module (110) is adapted for adjusting the second transmission power according to $T(k)=C/(I(k-1)Y(k-1))$.

12. Transceiver apparatus (100) of one of the claims 1 to 11, wherein the transmitter module (110) is adapted for cancelling the transmission when having transmitted with a maximum transmission power during a number of earlier radio frames.

13. Method for communicating between a transceiver apparatus (100) and a communication partner (200) in repetitive radio frames, a radio frame having a transmission time slot and a reception time slot, comprising the steps of transmitting a first transmit signal with a first transmission power during the transmission time slot of a first radio frame; receiving a receive signal having a control component depending on a reception quality of the first transmit signal at the communication partner (200) and an interference component having an interference power during the reception time slot of the first radio frame at the transceiver apparatus (100); detecting the control component and the interference power from the receive signal; transmitting a second transmit signal with a second transmission power during the transmission time slot of a second radio frame, wherein the step of transmitting during the transmission time slot of the second radio frame comprises transmitting the second transmit signal with the second transmission power being dependent on the interference power and the control component; the second transmission power being dependent on the interference power such that a higher interference power results in a lower second transmission power and the second transmission power being dependent on the control component such that the second transmission power is lowered compared to the first transmission power when the control component indicates that the reception quality threshold is exceeded at the communication partner (200).

14. Computer program having a program code for performing the method of claim 13 when the computer program runs on a computer.

15. Transceiver apparatus (200) operative for communicating with a communication partner (100) in repetitive radio frames, a radio frame having a transmission time slot and a reception time slot, comprising:

a transmitter module (210) for transmitting a first transmit signal having a first transmission power during the transmission time slot of a first radio frame and for transmitting a second transmit signal having a second transmission power during the transmission time slot of a second radio frame;
a receiver module (220) for receiving a receive signal having an information signal component with an information signal power and an interference component having an interference power during the reception time slot of the first radio frame; and
a detector (230) for detecting the information signal power and the interference power from the receive signal and for determining an indication whether a relation between the information signal power and the interference power exceeds a threshold;
wherein the transmitter module (210) is adapted for transmitting during the transmission time slot of the second radio frame the second transmit signal with the second transmission power being dependent on the information signal power such that a higher information signal power results in a lower second transmission power and the second transmit signal further being dependent on the indication.

16. Transceiver apparatus (200) of claim 15, wherein the transmitter module (210) is adapted for transmitting transmit information data during the transmission time slots.

17. Transceiver apparatus (200) of one of the claims 15 or 16, wherein the transmitter module (210) is adapted for including the indication explicitly in the second transmit signal by means of at least one of or a combination of the group of a code bit, a code word, a code or a modulation symbol.

18. Transceiver apparatus of one of the claims 15 or 16, wherein the transmitter module (210) is adapted for including the indication implicitly in the second transmit signal by means of one of or a combination of the group of a transmission power, a channel state information, a timing, a frequency or offsets therefrom.

19. Transceiver apparatus (200) of one of the claims 15 to 18, wherein the transmitter module (210) is adapted for including a binary indication in the second transmission signal, the binary indication indicating whether the relation exceeds the threshold.

20. Transceiver apparatus (200) of one of the claims 15 to 19, wherein the detector (230) is adapted for comparing a ratio of the information signal power and the interference power to a desired ratio and for determining a difference or factor or a scaled version thereof between the ratio and the desired ratio and wherein the transmitter module (210) is adapted for implicitly or explicitly including the difference or factor or a scaled version thereof in the second transmit signal.

21. Transceiver apparatus (200) of claim 20, wherein the transmitter module (210) is adapted for applying the difference or factor or a scaled version thereof to the second transmission power.

22. Transceiver apparatus (200) of one of the claims 15 to 21, wherein the transmitter module (210) is adapted for only applying the difference or factor or a scaled version thereof to the second transmission power if a number of transmission powers during a number of earlier radio frames did not differ more than a stationary threshold.

23. Transceiver apparatus of one of the claims 15 to 22, wherein the detector (230) is adapted for detecting the information signal power R, the interference power I, $\gamma = \dfrac{R}{I}$ as an achieved signal-to-interference-and-noise ratio, and wherein the transmitter module (210) is adapted for using as a second transmission power $T=\min\left\{\dfrac{C}{R}\cdot\dfrac{\Gamma}{Y}, T_{max}\right\}$,

wherein $\Gamma$ is a desired signal-to-noise-and-interference ratio, C is a constant, Y lies in $[1, \gamma/\Gamma]$ and $T_{max}$ is a maximum transmission power of the transmitter module (210).

24. Transceiver apparatus (200) of one of the claims 15 to 23, wherein the transmitter module (210) is adapted for cancelling the transmission when having transmitted with a maximum transmission power during a number of earlier radio frames.

25. Method for communicating between a transceiver apparatus (200) and a communication partner (100) in repetitive radio frames, a radio frame having a transmission time slot and a reception time slot, comprising the steps of:

transmitting a first transmit signal having a first transmission power during the transmission time slot of a first radio frame;
receiving a receive signal having an information signal component with an information signal power and an interference component having an interference power during the reception time slot of the first radio frame;
detecting the information signal power and the interference power from the receive signal;
determining an indication whether a relation between the information signal power and the interference power exceeds a threshold;
transmitting a second transmit signal having a second transmission power during the transmission time slot of a second radio frame, wherein the second transmit signal with the second transmission power being dependent on the information signal power such that a higher information signal power results in a lower second transmission power and the second transmit signal further being dependent on the indication.

26. Computer program having a program code for performing the method of claim 25 when the computer program runs on a computer.

27. Transceiver apparatus of one of the claims 1 to 12 further comprising the features of a transceiver apparatus of one of claims 15 to 24.

28. System for communicating in repetitive radio frames comprising a transceiver apparatus according to one of the claims 1 to 12 and a transceiver apparatus of one of the claims 15 to 24.

**Patentansprüche**

1. Sende-/Empfangsvorrichtung (100), die wirksam ist zum Kommunizieren mit einem Kommunikationspartner (200) in sich wiederholenden Funkrahmen, wobei ein Funkrahmen einen Sendezeitschlitz und einen Empfangszeitschlitz aufweist, die folgende Merkmale umfasst:

ein Sendermodul (110) zum Senden eines ersten Sendesignals mit einer ersten Sendeleistung während des Sendezeitschlitzes eines ersten Funkrahmens und zum Senden eines zweiten Sendesignals mit einer zweiten Sendeleistung während des Sendezeitschlitzes eines zweiten Funkrahmens;
ein Empfängermodul (120) zum Empfangen eines Empfangssignals, das eine Steuerkomponente, die von einer Empfangsqualität des ersten Sendesignals an dem Kommunikationspartner (200) abhängt, und eine Interferenzkomponente mit einer Interferenzleistung aufweist, während des Empfangszeitschlitzes des ersten Funkrahmens an der Sende-/Empfangsvorrichtung (100); und
einen Detektor (130) zum Erfassen der Steuerkomponente und der Interferenzleistung von dem Empfangssignal;
wobei das Sendermodul (110) angepasst ist zum Senden des zweiten Sendesignals während des Sendezeitschlitzes des zweiten Funkrahmens, wobei die zweite Sendeleistung abhängig ist von der Interferenzleistung und der Steuerkomponente;
wobei die zweite Sendeleistung abhängig ist von der Interferenzleistung, so dass eine höhere Interferenzleistung zu einer niedrigeren zweiten Sendeleistung führt, und die zweite Sendeleistung abhängig ist von der Steuerkomponente, so dass die zweite Sendeleistung verringert ist im Vergleich zu der ersten Sendeleistung, wenn die Steuerkomponente anzeigt, dass der Empfangsqualitätsschwellenwert an dem Kommunikationspartner (200) überschritten ist.

2. Sende-/Empfangsvorrichtung (100) gemäß Anspruch 1, bei der das Empfangssignal ein Informationssignal umfasst und bei der der Detektor (130) angepasst ist zum Erfassen des Informationssignals.

3. Sende-/Empfangsvorrichtung (100) gemäß einem der Ansprüche 1 oder 2, bei der der Detektor (130) angepasst ist zum expliziten Bestimmen der Steuerkomponente durch zumindest eine oder eine Kombination von der Gruppe aus einem Codebit, einem Codewort, einem Code oder einem Modulationssymbol.

4. Sende-/Empfangsvorrichtung (100) gemäß einem der Ansprüche 1 bis 3, bei der der Detektor (130) angepasst ist zum Extrahieren der Steuerkomponente durch implizites Erfassen der Steuerkomponente von dem Empfangssignal durch zumindest eine oder eine Kombination von der Gruppe aus einer Empfangsleistung, einem Signal/Rausch-Verhältnis, einem Signal/Rausch- und Interferenz-Verhältnis, einer Kanalzustandsinformation, einer Zeitgebung, einer Frequenz oder Versätzen davon.

5. Sende-/Empfangsvorrichtung (100) gemäß einem der Ansprüche 3 oder 4, bei der der Detektor (130) angepasst ist zum Erfassen einer binären Steuerkomponente von dem Empfangssignal, wobei die binäre Steuerkomponente anzeigt, ob die Empfangsqualität überschritten ist.

6. Sende-/Empfangsvorrichtung (100) gemäß Anspruch 5, bei der das Sendermodul (110) angepasst ist zum schrittweisen Ändern der zweiten Sendeleistung bezüglich der ersten Sendeleistung abhängig von der binären Steuerkomponente.

7. Sende-/Empfangsvorrichtung (100) gemäß einem der Ansprüche 2 bis 6, bei der der Detektor (130) angepasst ist zum Bestimmen der Steuerkomponente durch Vergleichen einer Empfangsleistung des Informationssignals während des Empfangszeitschlitzes des ersten Funkrahmens mit einer anderen Empfangsleistung eines anderen Informationssignals eines früheren Funkrahmens.

8. Sende-/Empfangsvorrichtung (100) gemäß Anspruch 7, bei der der Detektor (130) angepasst ist, um die Steuerkomponente nur zu bestimmen, wenn eine Anzahl von Empfangsleistungen in einer Anzahl von Empfangszeitschlitzen während einer Anzahl von früheren Funkrahmen sich nicht um mehr als einen stationären Schwellenwert unterschieden hat.

9. Sende-/Empfangsvorrichtung (100) gemäß Anspruch 7 oder 8, bei der der Detektor (130) angepasst ist zum Erfassen, als Steuerkomponente, einer Differenz zwischen den Empfangsleistungen der Informationssignale des ersten und früheren Funkrahmens oder einer skalierten Version derselben, und wobei das Sendermodul (110) angepasst ist zum Anlegen der Differenz oder der skalierten Version derselben an die zweite Sendeleistung im Vergleich zu der ersten Sendeleistung.

10. Sende-/Empfangsvorrichtung (100) gemäß einem der Ansprüche 7 oder 8, bei der der Detektor (130) angepasst ist zum Erfassen, als Steuerkomponente, einer Beziehung oder eines Faktors oder einer skalierten Version derselben zwischen den Empfangsleistungen der Informationssignale des ersten und des früheren Funkrahmens, und wobei das Sendermodul (110) angepasst ist zum Anlegen der Beziehung oder des Faktors oder der skalierten Version derselben an die zweite Sendeleistung im Vergleich zu der ersten Sendeleistung.

11. Sende-/Empfangsvorrichtung (100) gemäß einem der Ansprüche 1 bis 10, bei der die Interferenzsignalleistung $I(k-1)$ ist, $k$ der aktuelle Funkrahmen ist, $C$ eine Konstante ist und $Y(k-1)$ die Information über die Empfangsqualität ist, und wobei das Sendermodul (110) angepasst ist zum Einstellen der zweiten Sendeleistung gemäß $T(k) = C / (I(k-1)Y(k-1))$.

12. Sende-/Empfangsvorrichtung (100) gemäß einem der Ansprüche 1 bis 11, bei der das Sendermodul (110) angepasst ist zum Aufheben der Übertragung, wenn dasselbe während einer Anzahl von früheren Funkrahmen mit einer maximalen Sendeleistung gesendet hatte.

13. Verfahren zum Kommunizieren zwischen einer Sende-/Empfangsvorrichtung (100) und einem Kommunikationspartner (200) in sich wiederholenden Funkrahmen, wobei ein Funkrahmen einen Sendezeitschlitz und einen Empfangszeitschlitz aufweist, das folgende Schritte umfasst:

Senden eines ersten Sendesignals mit einer ersten Sendeleistung während des Sendezeitschlitzes eines ersten Funkrahmens;

Empfangen eines Empfangssignals, das eine Steuerkomponente, die von einer Empfangsqualität des ersten Sendesignals an dem Kommunikationspartner (200) abhängt, und eine Interferenzkomponente mit einer Interferenzleistung aufweist, während des Empfangszeitschlitzes des ersten Funkrahmens an der Sende-/Empfangsvorrichtung (100);

Erfassen der Steuerkomponente und der Interferenzleistung von dem Empfangssignal;

Senden eines zweiten Sendesignals mit einer zweiten Sendeleistung während des Sendezeitschlitzes eines zweiten Funkrahmens,

wobei der Schritt des Sendens während des Sendezeitschlitzes des zweiten Funkrahmens das Senden des zweiten Sendesignals umfasst, wobei die zweite Sendeleistung abhängig ist von der Interferenzleistung und der Steuerkomponente;

wobei die zweite Sendeleistung abhängig ist von der Interferenzleistung, so dass eine höhere Interferenzleistung zu einer niedrigeren zweiten Sendeleistung führt, und die zweite Sendeleistung abhängig ist von der Steuerkomponente, so dass die zweite Sendeleistung verringert ist im Vergleich zu der ersten Sendeleistung, wenn die Steuerkomponente anzeigt, dass der Empfangsqualitätsschwellenwert an dem Kommunikationspartner (200) überschritten ist.

14. Computerprogramm mit einem Programmcode zum Durchführen des Verfahrens gemäß Anspruch 13, wenn das Computerprogramm auf einem Computer läuft.

15. Sende-/Empfangsvorrichtung (200), die wirksam ist zum Kommunizieren mit einem Kommunikationspartner (100) in sich wiederholenden Funkrahmen, wobei ein Funkrahmen einen Sendezeitschlitz und einen Empfangszeitschlitz aufweist, die folgende Merkmale umfasst:

ein Sendermodul (210) zum Senden eines ersten Sendesignals mit einer ersten Sendeleistung während des Sendezeitschlitzes eines ersten Funkrahmens und zum Senden eines zweiten Sendesignals mit einer zweiten Sendeleistung während des Sendezeitschlitzes eines zweiten Funkrahmens;

ein Empfängermodul (220) zum Empfangen eines Empfangssignals, das eine Informationssignalkomponente mit einer Informationssignalleistung und eine Interferenzkomponente mit einer Interferenzleistung aufweist, während des Empfangszeitschlitzes des ersten Funkrahmens; und

einen Detektor (230) zum Erfassen der Informationssignalleistung und der Interferenzleistung von dem Empfangssignal und zum Bestimmen einer Anzeige, ob eine Beziehung zwischen der Informationssignalleistung und der Interferenzleistung einen Schwellenwert überschreitet;

wobei das Sendermodul (210) angepasst ist zum Senden des zweiten Sendesignals mit der zweiten Sendeleistung, die abhängig ist von der Informationssignalleistung, während des Sendezeitschlitzes des zweiten Funkrahmens, so dass eine höhere Informationssignalleistung zu einer niedrigeren zweiten Sendeleistung führt und das zweite Sendesignal ferner von der Anzeige abhängig ist.

16. Sende-/Empfangsvorrichtung (200) gemäß Anspruch 15, bei der das Sendermodul (210) angepasst ist zum Senden von Sendeinformationsdaten während der Sendezeitschlitze.

17. Sende-/Empfangsvorrichtung (200) gemäß einem der Ansprüche 15 oder 16, bei der das Sendermodul (210) angepasst ist zum expliziten Aufnehmen der Anzeige in dem zweiten Sendesignal durch zumindest eines oder eine Kombination von der Gruppe aus einem Codebit, einem Codewort, einem Code oder einem Modulationssymbol.

18. Sende-/Empfangsvorrichtung gemäß einem der Ansprüche 15 oder 16, bei der das Sendermodul (210) angepasst ist zum impliziten Aufnehmen der Anzeige in dem zweiten Sendesignal durch eines oder eine Kombination von der Gruppe aus einer Sendeleistung, einer Kanalzustandsinformation, einer Zeitgebung, einer Frequenz oder Versätzen davon.

19. Sende-/Empfangsvorrichtung (200) gemäß einem der Ansprüche 15 bis 18, bei der das Sendermodul (201) angepasst ist zum Aufnehmen einer binären Anzeige in dem zweiten Sendesignal, wobei die binäre Anzeige anzeigt, ob die Beziehung den Schwellenwert überschreitet.

20. Sende-/Empfangsvorrichtung (200) gemäß einem der Ansprüche 15 bis 19, bei der Detektor (230) angepasst ist zum Vergleichen eines Verhältnisses der Informationssignalleistung und der Interferenzleistung mit einem gewünschten Verhältnis und zum Bestimmen einer Differenz oder eines Faktors oder einer skalierten Version derselben

**EP 2 045 930 B1**

zwischen dem Verhältnis und dem gewünschten Verhältnis, und wobei das Sendermodul (210) angepasst ist zum impliziten oder expliziten Aufnehmen der Differenz oder des Faktors oder einer skalierten Version derselben in das zweite Sendesignal.

21. Sende-/Empfangsvorrichtung (200) gemäß Anspruch 20, bei der das Sendermodul (210) angepasst ist zum Anlegen der Differenz oder des Faktors oder einer skalierten Version derselben an die zweite Sendeleistung.

22. Sende-/Empfangsvorrichtung (200) gemäß einem der Ansprüche 15 bis 21, bei der das Sendermodul (210) angepasst ist, um nur die Differenz oder den Faktor oder eine skalierte Version derselben an die zweite Sendeleistung anzulegen, falls eine Anzahl von Sendeleistungen während einer Anzahl von früheren Funkrahmen sich nicht um mehr als einen stationären Schwellenwert unterschieden hat.

23. Sende-/Empfangsvorrichtung (200) gemäß einem der Ansprüche 15 bis 22, bei der der Detektor (230) angepasst ist zum Erfassen der Informationssignalleistung R, der Interferenzleistung Y, $\gamma = \dfrac{R}{I}$ als ein erreichtes Signal/Interferenz- und Rausch-Verhältnis, und wobei das Sendermodul (210) angepasst ist zum Verwenden von

$$T = \min\left\{ \frac{C}{R} \cdot \frac{\Gamma}{Y}, T_{max} \right\}$$ als eine zweite Sendeleistung, wobei $\Gamma$ ein gewünschtes Signal/Rausch- und Interferenzverhältnis ist, C eine Konstante ist, Y in $[1, \gamma/\Gamma]$ liegt und $T_{max}$ eine maximale Sendeleistung des Sendermoduls (210) ist.

24. Sende-/Empfangsvorrichtung (200) gemäß einem der Ansprüche 15 bis 23, bei der das Sendermodul (210) angepasst ist zum Aufheben der Übertragung, wenn dasselbe während einer Anzahl von früheren Funkrahmen mit einer maximalen Sendeleistung gesendet hatte.

25. Verfahren zum Kommunizieren zwischen einer Sende-/Empfangsvorrichtung (200) und einem Kommunikationspartner (100) in sich wiederholenden Funkrahmen, wobei ein Funkrahmen einen Sendezeitschlitz und einen Empfangszeitschlitz aufweist, das folgende Schritte umfasst:

Senden eines ersten Sendesignals mit einer ersten Sendeleistung während des Sendezeitschlitzes eines ersten Funkrahmens;
Empfangen eines Empfangssignals, das eine Informationssignalkomponente mit einer Informationssignalleistung und eine Interferenzkomponente mit einer Interferenzleistung aufweist, während des Empfangszeitschlitzes des ersten Funkrahmens;
Erfassen der Informationssignalleistung und der Interferenzleistung von dem Empfangssignal;
Bestimmen einer Anzeige, ob eine Beziehung zwischen der Informationssignalleistung und der Interferenzleistung einen Schwellenwert überschreitet;
Senden eines zweiten Sendesignals mit einer zweiten Sendeleistung während des Sendezeitschlitzes eines zweiten Funkrahmens, wobei das zweite Sendesignal mit der zweiten Sendeleistung abhängig ist von der Informationssignalleistung, so dass eine höhere Informationssignalleistung zu einer niedrigeren zweiten Sendeleistung führt und das zweite Sendesignal ferner von der Anzeige abhängig ist.

26. Computerprogramm mit einem Programmcode zum Durchführen des Verfahrens gemäß Anspruch 25, wenn das Computerprogramm auf einem Computer läuft.

27. Sende-/Empfangsvorrichtung gemäß einem der Ansprüche 1 bis 12, das ferner die Merkmale einer Sende-/Empfangsvorrichtung gemäß einem der Ansprüche 15 bis 24 umfasst.

28. System zum Kommunizieren in sich wiederholenden Funkrahmen, das eine Sende-/Empfangsvorrichtung gemäß einem der Ansprüche 1 bis 12 und eine Sende-/Empfangsvorrichtung gemäß einem der Ansprüche 15 bis 24 umfasst.

**Revendications**

1. Emetteur-récepteur (100) convenant pour communiquer avec un partenaire de communication (200) dans des trames radioélectriques répétitives, une trame radioélectrique présentant une fenêtre de temps d'émission et une fenêtre de temps de réception, comprenant:

un module émetteur (110) destiné à émettre un premier signal d'émission avec une première puissance d'émission pendant la fenêtre de temps d'émission d'une première trame radioélectrique et à émettre un deuxième signal d'émission avec une deuxième puissance d'émission pendant la fenêtre de temps d'émission d'une deuxième trame radioélectrique;
un module récepteur (120) destiné à recevoir un signal de réception présentant une composante de contrôle en fonction d'une qualité de réception du premier signal d'émission au partenaire de communication (200) et une composante d'interférence ayant une puissance d'interférence pendant la fenêtre de temps de réception de la première trame radioélectrique à l'émetteur-récepteur (100); et
un détecteur (130) destiné à détecter la composante de contrôle et la puissance d'interférence du signal de réception;
dans lequel le module émetteur (110) est adapté pour émettre pendant la fenêtre de temps d'émission de la deuxième trame radioélectrique le deuxième signal d'émission avec la deuxième puissance d'émission fonction de la puissance d'interférence et de la composante de contrôle;
la deuxième puissance d'émission étant fonction de la puissance d'interférence de sorte qu'une puissance d'interférence supérieure résulte en une deuxième puissance d'émission inférieure et la deuxième puissance d'émission étant fonction de la composante de contrôle de sorte que la deuxième puissance d'émission soit abaissée, comparée à la première puissance d'émission, lorsque la composante de contrôle indique que le seuil de qualité de réception est excédé au partenaire de communication (200).

2. Emetteur-récepteur (100) selon la revendication 1, dans lequel le signal de réception comprend un signal d'information et dans lequel le détecteur (130) est adapté pour détecter le signal d'information.

3. Emetteur-récepteur (100) selon l'une des revendications 1 ou 2, dans lequel le détecteur (130) est adapté pour déterminer la composante de contrôle explicitement au moyen d'au moins l'un ou d'une combinaison du groupe composé d'un bit de code, d'un mot de code, d'un code ou d'un symbole de modulation.

4. Emetteur-récepteur (100) selon l'une des revendications 1 à 3, dans lequel le détecteur (130) est adapté pour extraire la composante de contrôle en détectant la composante de contrôle implicitement à partir du signal de réception à l'aide d'au moins l'un ou d'une combinaison du groupe composé d'une puissance de réception, d'un rapport signal-bruit, d'un rapport signal-bruit-interference, d'une information d'état de canal, d'une synchronisation, d'une fréquence ou des écarts de ceux-ci.

5. Emetteur-récepteur (100) selon l'une des revendications 3 ou 4, dans lequel le détecteur (130) est adapté pour détecter une composante de contrôle binaire à partir du signal de réception, la composante de contrôle binaire indiquant si la qualité de réception est excédée.

6. Emetteur-récepteur (100) selon la revendication 5, dans lequel le module émetteur (110) est adapté pour changer pas à pas la deuxième puissance d'émission par rapport à la première puissance d'émission en fonction de la composante de contrôle binaire.

7. Emetteur-récepteur (100) selon l'une des revendications 2 à 6, dans lequel le détecteur (130) est adapté pour déterminer la composante de contrôle en comparant une puissance de réception du signal d'information pendant la fenêtre de temps de réception de la première trame radioélectrique à une autre puissance de réception d'un autre signal d'information d'une trame radioélectrique antérieure.

8. Emetteur-récepteur (100) selon la revendication 7, dans lequel le détecteur (130) est adapté pour déterminer la composante de contrôle uniquement si un nombre de puissances de réception dans un nombre de fenêtres de temps de réception pendant un nombre de trames radioélectriques antérieures ne différait pas de plus d'un seuil stationnaire.

9. Emetteur-récepteur (100) selon l'une des revendications 7 ou 8, dans lequel le détecteur (130) est adapté pour détecter, comme composante de contrôle, une différence entre les puissances de réception des signaux d'information de la première trame radioélectrique et de la trame radioélectrique antérieure ou une version échelonnée de celle-ci, et dans lequel le module émetteur (110) est adapté pour appliquer la différence ou la version échelonnée de celle-ci à la deuxième puissance d'émission lorsque comparée à la première puissance d'émission.

**10.** Emetteur-récepteur selon l'une des revendications 7 ou 8, dans lequel le détecteur (130) est adapté pour détecter, comme composante de contrôle, un rapport ou un facteur ou une version échelonnée de ces derniers entre les puissances de réception des signaux d'information de la première trame radioélectrique et de la trame radioélectrique antérieure, et dans lequel le module émetteur (110) est adapté pour appliquer le rapport ou le facteur or ou la version échelonnée de ces derniers à la deuxième puissance d'émission lorsque comparée à la première puissance d'émission.

**11.** Emetteur-récepteur (100) selon l'une des revendications 1 à 10, dans lequel la puissance de signal d'interférence est de I(k-1), k est la trame radioélectrique actuelle, C est une constante et Y(k-1) est l'information sur la qualité de réception et dans lequel le module émetteur (110) est adapté pour ajuster la deuxième puissance d'émission selon T(k)=C/(I(k-1)Y(k-1)).

**12.** Emetteur-récepteur (100) selon l'une des revendications 1 à 11, dans lequel le module émetteur (110) est adapté pour annuler l'émission lorsqu'il a été émis avec une puissance d'émission maximale pendant un nombre de trames radioélectriques antérieures.

**13.** Procédé pour communiquer entre un émetteur-récepteur (100) et un partenaire de communication (200) dans des trames radioélectriques répétitives, une trame radioélectrique présentant une fenêtre de temps d'émission et une fenêtre de temps de réception, comprenant les étapes consistant à:

émettre un premier signal d'émission avec une première puissance d'émission pendant la fenêtre de temps d'émission d'une première trame radioélectrique;
recevoir un signal de réception présentant une composante de contrôle fonction d'une qualité de réception du premier signal d'émission au partenaire de communication (200) et une composante d'interférence ayant une puissance d'interférence pendant la fenêtre de temps de réception de la première trame radioélectrique à l'émetteur-récepteur (100);
détecter la composante de contrôle et la puissance d'interférence à partir du signal de réception;
émettre un deuxième signal d'émission avec une deuxième puissance d'émission pendant la fenêtre de temps d'émission d'une deuxième trame radioélectrique,
dans lequel l'étape consistant à émettre pendant la fenêtre de temps d'émission de la deuxième trame radioélectrique comprend le fait d'émettre le deuxième signal d'émission avec la deuxième puissance d'émission en fonction de la puissance d'interférence et de la composante de contrôle;
la deuxième puissance d'émission étant fonction de la puissance d'interférence de sorte qu'une puissance d'interférence supérieure résulte en une deuxième puissance d'émission inférieure et la deuxième puissance d'émission étant fonction de la composante de contrôle de sorte que la deuxième puissance d'émission soit abaissée, comparée à la première puissance d'émission lorsque la composante de contrôle indique que le seuil de qualité de réception est excédé au partenaire de communication (200).

**14.** Programme d'ordinateur ayant un code de programme pour réaliser le procédé selon la revendication 13 lorsque le programme d'ordinateur est exécuté sur un ordinateur.

**15.** Emetteur-récepteur (200) convenant pour communiquer avec un partenaire de communication (100) dans des trames radioélectriques répétitives, une trame radioélectrique présentant une fenêtre de temps d'émission et une fenêtre de temps de réception, comprenant:

un module émetteur (210) destiné à émettre un premier signal d'émission ayant une première puissance d'émission pendant la fenêtre de temps d'émission d'une première trame radioélectrique et à émettre un deuxième signal d'émission ayant une deuxième puissance d'émission pendant la fenêtre de temps d'émission d'une deuxième trame radioélectrique;
un module récepteur (220) destiné à recevoir un signal de réception présentant une composante de signal d'information avec une puissance de signal d'information et une composante d'interférence ayant une puissance d'interférence pendant la fenêtre de temps de réception de la première trame radioélectrique; et
un détecteur (230) destiné à détecter la puissance de signal d'information et la puissance d'interférence à partir du signal de réception et à déterminer une indication de si un rapport entre la puissance de signal d'information et la puissance d'interférence excède un seuil;
dans lequel le module émetteur (210) est adapté pour émettre pendant la fenêtre de temps d'émission de la deuxième trame radioélectrique le deuxième signal d'émission avec la deuxième puissance d'émission en fonction de la puissance de signal d'information de sorte qu'une puissance de signal d'information supérieure résulte en une deuxième puissance d'émission inférieure et le deuxième signal d'émission est par ailleurs fonction de l'indication.

16. Emetteur-récepteur (200) selon la revendication 15, dans lequel le module émetteur (210) est adapté pour émettre des données d'information d'émission pendant les fenêtres de temps d'émission.

17. Emetteur-récepteur (200) selon l'une des revendications 15 ou 16, dans lequel le module émetteur (210) est adapté pour inclure l'indication explicitement dans le deuxième signal d'émission au moyen d'au moins l'un ou une combinaison du groupe composé d'un bit de code, d'un mot de code, d'un code ou d'un symbole de modulation.

18. Emetteur-récepteur selon l'une des revendications 15 ou 16, dans lequel le module émetteur (210) est adapté pour inclure l'indication implicitement dans le deuxième signal d'émission au moyen d'au moins l'un ou une combinaison du groupe composé d'une puissance d'émission, d'une information sur l'état de canal, d'une synchronisation, d'un fréquence ou de décalages par rapport à ces derniers.

19. Emetteur-récepteur (200) selon l'une des revendications 15 à 18, dans lequel le module émetteur (210) est adapté pour inclure une indication binaire dans le deuxième signal d'émission, l'indication binaire indiquant si le rapport excède le seuil.

20. Emetteur-récepteur (200) selon l'une des revendications 15 à 19, dans lequel le détecteur (230) est adapté pour comparer un rapport entre la puissance de signal d'information et la puissance d'interférence et un rapport désiré et pour déterminer une différence ou un facteur ou une version échelonnée de ces derniers entre le rapport et le rapport désiré et dans lequel le module émetteur (210) est adapté pour inclure implicitement ou explicitement la différence ou le facteur ou une version échelonnée de ces derniers dans le deuxième signal d'émission.

21. Emetteur-récepteur (200) selon la revendication 20, dans lequel le module émetteur (210) est adapté pour appliquer la différence ou le facteur ou une version échelonné de ceux-ci à la deuxième puissance d'émission.

22. Emetteur-récepteur (200) selon l'une des revendications 15 à 21, dans lequel le module émetteur (210) est adapté pour appliquer la différence ou le facteur ou une version échelonné de ceux-ci à la deuxième puissance d'émission uniquement si un nombre de puissances d'émission pendant un nombre de trames radioélectriques antérieures ne différait pas de plus d'un seuil stationnaire.

23. Emetteur-récepteur (200) selon l'une des revendications 15 à 22, dans lequel le détecteur (230) est adapté pour détecter la puissance de signal d'information R, la puissance d'interférence I, $\gamma = \dfrac{R}{I}$ comme rapport signal-interférence-bruit obtenu, et dans lequel le module émetteur (210) est adapté pour utiliser comme deuxième puissance d'émission $\mathrm{T} = \min\left( \dfrac{C}{R} \cdot \dfrac{\Gamma}{Y}, T_{\max} \right)$, où $\Gamma$ est un rapport signal-bruit-interférence désiré, C est une constante, Y se situe dans $[1, \gamma/\Gamma]$ et $T_{\max}$ est une puissance d'émission maximale du module émetteur (210).

24. Emetteur-récepteur (200) selon l'une des revendications 15 à 23, dans lequel le module émetteur (210) est adapté pour annuler l'émission lorsqu'il a été émis avec une puissance d'émission maximale pendant un nombre de trames radioélectriques antérieures.

25. Procédé pour communiquer entre un émetteur-récepteur (200) et un partenaire de communication (100) dans des trames radioélectriques répétitives, une trame radioélectrique présentant une fenêtre de temps d'émission et une fenêtre de temps de réception, comprenant les étapes consistant à:

émettre un premier signal d'émission ayant une première puissance d'émission pendant la fenêtre de temps d'émission d'une première trame radioélectrique;
recevoir un signal de réception présentant une composante de signal d'information avec une puissance de signal d'information et une composante d'interférence ayant une puissance d'interférence pendant la fenêtre de temps de réception de la première trame radioélectrique;

détecter la puissance de signal d'information et la puissance d'interférence à partir du signal de réception;

déterminer une indication de si un rapport entre la puissance de signal d'information et la puissance d'interférence excède un seuil;

émettre un deuxième signal d'émission ayant une deuxième puissance d'émission pendant la fenêtre de temps d'émission d'une deuxième trame radioélectrique, où le deuxième signal d'émission avec la deuxième puissance d'émission est fonction de la puissance de signal d'information de sorte qu'une puissance de signal d'information supérieure résulte en une deuxième puissance d'émission inférieure et le deuxième signal d'émission est par ailleurs fonction de l'indication.

26. Programme d'ordinateur ayant un code de programme pour réaliser le procédé selon la revendication 25 lorsque le programme d'ordinateur est exécuté sur un ordinateur.

27. Emetteur-récepteur selon l'une des revendications 1 à 12, comprenant par ailleurs les caractéristiques d'un émetteur-récepteur selon l'une des revendications 15 à 24.

28. Système pour communiquer dans des trames radioélectriques répétitives, comprenant un émetteur-récepteur selon l'une des revendications 1 à 12 et un émetteur-récepteur selon l'une des revendications 15 à 24.

control component

interference power

Transmitter
module

—110

Detector    —130

receive signal

Receiver
module

—120

100

FIGURE 1

information
signal component

Transmitter
module

indication

210

Detector

230

receive signal

Receiver
module

220

200

# FIGURE 2

$$G_{n,n}$$

$$T_{X_n}^{FL}$$

$$R_{X_n}^{FL} = G_{n,n} \cdot T_{X_n}^{FL} = \gamma_n^{FL} \cdot I_n^{FL}$$

$$T_{X_n} \quad X \sim 100 \qquad\qquad 200 \sim X \quad R_{X_n}$$

$$T_{X_n}^{RL}$$

$$\gamma_n^{RL} \cdot I_n^{RL} = G_{n,r} \cdot T_{X_n}^{RL} = R_{X_n}^{RL}$$

$$G_{n,n}$$

FIGURE 3

EP 2 045 930 B1

FIGURE 4

# FIGURE 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 200606009845 A

- EP 1802013 A

**Non-patent literature cited in the description**

- **K. K. LEUNG ; C. W. SUNG ; W. S. WONG ; T. M. LOK.** Convergence Theorem for a General Class of Power-Control Algorithms. *IEEE Transactions on Communications,* September 2004, vol. 52 (9), 1566-1574
- **G.J. FOSCHINI ; Z. MILJANIC.** A Simple Distributed Autonomous Power Control Algorithm and its Convergence. *IEEE Transactions on Vehicular Technology,* November 1992, vol. 42 (4), 641-646

- **D. MITRA.** An Asynchronous Distributed Algorithm for Power Control in Cellular Radio Systems. *Proceedings of the WINLAB Workshop on Third Generation Wireless Information Networks,* October 1993
- **A. TYRRELL ; H. HAAS ; G. AUER ; P. OMIYI.** Decentralized Interference Avoidance Using Busy Bursts. *Proceedings of the International Conference on Communications ICC'07,* June 2007